# EUROPÄISCHE PATENTSCHRIFT

(11) **EP 1 685 321 B1**
(45) Veröffentlichungstag und Bekanntmachung des Hinweises auf die Patenterteilung: **04.03.2009**
(21) Anmeldenummer: 04786761.9
(22) Anmeldetag: 14.09.2004
(51) Int. Cl.: F02M 21/02, F16K 31/06

(54) **VENTIL ZUM STEUERN EINES FLUIDS**
VALVE USED TO CONTROL A FLUID
SOUPAPE DE COMMANDE D'UN FLUIDE

(30) Priorität: 11.11.2003 DE 10352502
(43) Veröffentlichungstag der Anmeldung: 02.08.2006
(73) Patentinhaber: ROBERT BOSCH GMBH, 70442 Stuttgart (DE)
(72) Erfinder: BRENNER, Frank, 71686 Remseck (DE); MILLER, Frank, 74360 Ilsfeld (DE); KROEGER, Kai, 70372 Stuttgart (DE)
(86) Internationale Anmeldenummer: PCT/DE2004/002040
(87) Internationale Veröffentlichungsnummer: WO 2005/050000

(56) Entgegenhaltungen:
- WO-A-02/18828
- GB-A- 1 213 925
- US-A- 5 794 860
- US-A- 6 079 642
- US-B1- 6 349 703

## Beschreibung

### Stand der Technik

Die Erfindung geht von einem Ventil zum Steuern eines Fluids, insbesondere zum Steuern eines Gases, gemäß der im Oberbegriff des Patentanspruches 1 näher definierten Art aus.

Ein derartiges Ventil ist aus der Praxis bekannt und dient beispielsweise als Gassteuerventil bei einer Brennstoffzelle oder bei einem Gasmotor (DE 102 49 964 A1).

Das bekannte Ventil hat ein Ventilgehäuse, das eine Führungshülse für einen Magnetanker umfasst und eine elektromagnetische Betätigungseinheit für den Magnetanker aufnimmt. Der Magnetanker ist über mindestens eine Führungsfläche, die von einem Führungsbund gebildet sein kann, axial verschiebbar in der Führungshülse geführt. Zur Steuerung eines Fluidstroms von einer Zuströmseite zu einer Abströmseite des Ventils ist der Magnetanker mit einem Ventilschließglied versehen, das mit einem gegebenenfalls als Flachsitz ausgebildeten Ventilsitz zusammenwirkt, so dass zu der Abströmseite des Ventils führende Abströmöffnungen steuerbar sind.

Bei Verwendung des bekannten Ventils als Gasventil besteht das Problem, dass insbesondere bei der Steuerung trockener Gase keine durch das zu steuernde Medium bedingte Schmierung der Führungsflächen des Magentankers erfolgt. Dies führt zu einem erhöhten Verschleiß, der insbesondere bei einer Schiefstellung des Magnetankers auftritt, da dann scharfe Kanten, welche die Führungsfläche begrenzen, bei einer Auf- bzw. Abwärtsbewegung des Magnetankers zu sich nachteilhaft auswirkenden hohen Pressungen im Berührungsbereich zwischen dem Magnetanker und der Führungshülse und gegebenenfalls auch zu einem Abtrag einer etwaig auf die Innenseite der Führungshülse aufgebrachte Beschichtung führen.

Aus der US 6,349,703 B1 ist bereits ein Druckregelventil bekannt, das zur Regelung des Druckes in einem Kraftstoffspeicher dient und einen Ventilkörper aufweist, in dem in einer Bohrung ein kolbenförmiges Ventilglied gegen die Kraft einer Schließfeder axial verschiebbar angeordnet ist. Das Ventilglied bildet einen Anker eines Elektromagneten, der zur Unterstützung der Schließkraft der Schließfeder bestrombar ist. Das Ventilglied wirkt auf ein Schließelement, das durch die Kraft der Schließfeder und die magnetische Kraft gegen einen Ventilsitz gepresst wir und das vom Druck im Kraftstoffspeicher beaufschlagt ist. Das Ventilglied weist zwei in axialer Richtung zueinander versetzt angeordnete Führungsabschnitte auf, die als kurze Zylinderabschnitte oder als ballige Abschnitte ausgebildet sind und einen Durchmesser aufweisen, der nur wenig kleiner ist als der Durchmesser der Bohrung. Über seine Führungsabschnitte ist das Ventilglied in der Bohrung insofern mit definierter Anlage verschiebbar geführt. Bei der balligen Ausgestaltung der Führungsabschnitte liegen somit Ausgleichsflächen mit einem bezüglich des Ventilglieds konvex gewölbten Querschnitt vor, die sich in axialer Richtung des Ventilglieds an die Führungsabschnitte anschließen und jeweils in einen durchmesserkleineren Zylinderabschnitt des kolbenförmigen Ventilglieds übergehen.

### Vorteile der Erfindung

Das erfindungsgemäße Ventil zum Steuern eines Fluids, insbesondere zum Steuern eines Gases mit den Merkmalen nach dem Oberbegriff des Patentanspruches, bei welchem Ventil der Magnetanker mindestens eine Ausgleichsfläche mit einem bezüglich des Magnetankers konvex gewölbten Querschnitt hat, die sich in axialer Richtung des Magnetankers an die Führungsfläche anschließt, hat den Vorteil, dass bei einer Schiefstellung des Magnetankers durch die so erfolgte Verrundung der die Führungsfläche begrenzenden Kante eine vergrößerte Auflagefläche vorliegt, was wiederum zu geringeren Pressungen im Berührungsbereich zwischen dem Magnetanker und dem Ventilgehäuse und damit zu einem geringeren Verschleiß führt. Insbesondere bei einem nicht planparallel erfolgenden Aufschlag des Magnetankers auf einen Polkern wird damit der Verschleiß im Bereich der Führungsfläche des Magnetankers bzw. der Führungshülse reduziert.

Das bedeutet insbesondere, dass der Magnetanker im Bereich eines Übergangs zwischen der mindestens einen Führungsfläche zu der jeweiligen Stirnfläche des Magnetankers wenigstens abschnittsweise mit einem Krümmungsradius ausgebildet ist, der einem erhöhten Verschleiß bei einer Schiefstellung des Magnetankers insbesondere durch eine verminderte Reibbelastung sowie durch ein vermindertes Verkanten entgegenwirkt.

Das Ventil nach der Erfindung ist insbesondere zur Massenstromregelung von Gasen wie Wasserstoff und Erdgas geeignet und kann beispielsweise bei einer Brennstoffzelle oder auch bei einem Gasmotor eingesetzt werden.

Bei einer bevorzugten Ausführungsform des Ventils nach der Erfindung ist beiden Stirnflächen des Magnetankers jeweils eine Ausgleichsfläche mit einem gewölbten Querschnitt zugeordnet.

Wenn der Magnetanker zwei Führungsbünde und damit zwei Führungsflächen aufweist, ist vorzugsweise jeder der Führungsbünde an seiner der jeweils näher liegenden Stirnseite zugewandten Flanke mit einer Verrundung, d. h. mit einer einem gewölbten Querschnitt aufweisenden Ausgleichsfläche ausgebildet.

Um eine optimale Funktion der Ausgleichsfläche zu gewährleisten, ist es zweckmäßig, wenn die Ausgleichsfläche in Querschnittsrichtung einen möglichst großen Krümmungsradius, beispielsweise einen Krümmungsradius von mindestens 0,5 mm hat.

Um bei der Fertigung des Magnetankers einen möglichst großen Krümmungsradius der Ausgleichsfläche herstellen zu können, ist es vorteilhaft, wenn sich an die Ausgleichsfläche eine Kegelfläche anschließt.

Um zu gewährleisten, dass bei einer Beschichtung einer Stirnfläche des Magnetankers, beispielsweise mit einer aus Chrom gebildeten, mit einem Polkern zusammenwirkenden Verschleißschutzschicht keine Beschichtung der Führungsfläche(n) des Magnetankers erfolgt, kann vorteilhafterweise zwischen der jeweiligen Stirnfläche des Magnetankers und der mit dem gewölbten Querschnitt versehenen Ausgleichsfläche eine Beschichtungsauslaufzone ausgebildet sein. Die Beschichtungsauslaufzone des Magnetankers stellt einen Übergangsbereich zwischen der die Beschichtung aufweisenden Stirnfläche und der Führung des Magnetankers dar. Die Beschichtungsauslaufzone kann gegebenenfalls noch mit der Beschichtung der Stirnfläche versehen sein. Sie kommt aber selbst bei einer Schiefstellung des Magnetankers nicht mit der Führungshülse in Berührung. Ohne Beschichtung der Führungsfläche mit der Verschleißschutzschicht der Stirnfläche ist auch weitgehend ausgeschlossen, dass ein zu geringes Führungsspiel des Magentankers vorliegt oder Prozessprobleme auftreten, welche darin bestehen können, dass eine etwaig vorgesehene Führungsflächenbeschichtung aus einem Gleitlack oder dergleichen nicht mehr aufgebracht werden kann.

Bei einer einfach herzustellenden Ausführung des Magnetankers ist die Beschichtungsauslaufzone von einer Zylinderfläche gebildet, die einen geringeren Durchmesser als die zylindrische Führungsfläche des Magnetankers hat.

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel eines Ventils nach der Erfindung ist in der Zeichnung schematisch vereinfacht dargestellt und wird in der nachfolgenden Beschreibung näher erläutert. Es zeigen
Figur 1 einen Längsschnitt durch ein erfindungsgemäß ausgebildetes Gasventil; und
Figur 2 eine vergrößerte Darstellung des Magnetankers des Gasventils nach Figur 1 in dem Bereich II in Figur 1.

### Beschreibung des Ausführungsbeispiels

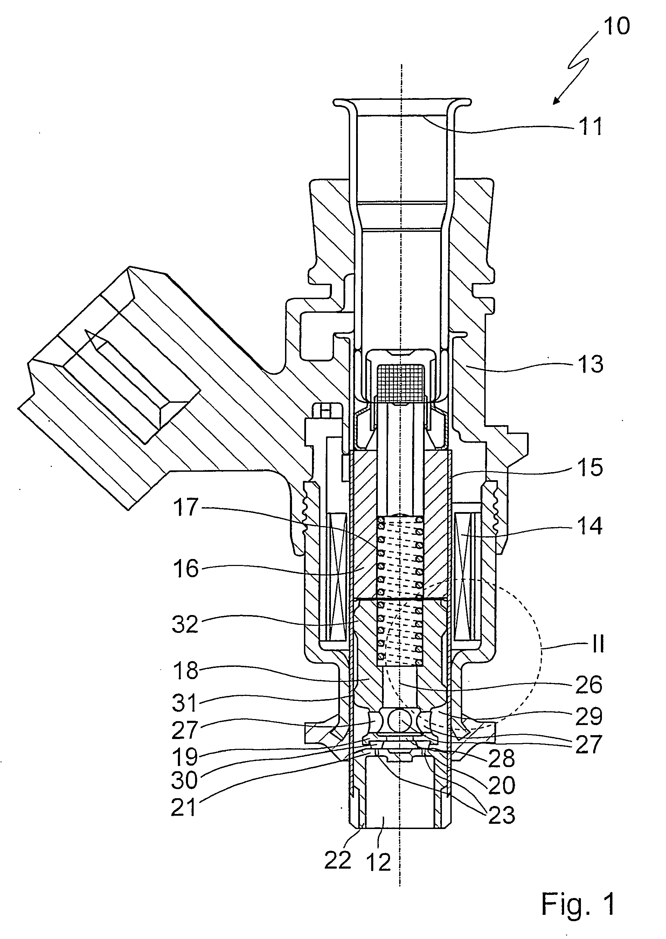

In Figur 1 ist ein Gasventil 10 dargestellt, das zum Einbau bei einer Brennstoffzelle oder bei einem Gasmotor ausgelegt ist und zur Regelung eines Wasserstoffstroms bzw. eines Erdgasstroms von einer Zuströmseite 11 zu einer Abströmseite 12 dient.

Das Gasventil 10 umfasst ein mehrteiliges Gehäuse 13, in welchem eine Magnetspule 14 angeordnet ist, die eine dem Gehäuse 13 zugeordnete Führungshülse 15 umgreift.

In der Führungshülse 15 ist ein im Wesentlichen rohrförmiger Stopfen 16 fixiert, der in seinem Inneren ein Ende einer als Vorspannfeder dienenden Spiralfeder 17 aufnimmt, welche auf einen Magnetanker 18 wirkt.

Der Magnetanker 18, der im vorliegenden Fall einen Durchmesser von etwa 6 mm hat, ist längsverschieblich in der Führungshülse 15 geführt und wirkt mit einem als Ventilschließglied ausgebildeten Stirnbereich 19 mit einem Ventilsitz 20 zusammen, der an einer Sitzplatte 21 ausgebildet ist, welche den Bodenbereich eines topfförmigen und als Schalldämpfer wirkenden Ventileinsatzes 22 bildet.

Die Sitzplatte 21 ist von einer Vielzahl von Abströmdüsen 23 durchgriffen, die entlang einer Kreislinie angeordnet sind und die mittels des Magnetankers 18 bzw. mittels des Ventilschließglieds 19 steuerbar sind.

Der Magnetanker 18 hat des Weiteren einen Innenraum 26, der mit der Zuströmseite 11 des Gasventils 10 verbunden ist und von dem vier radiale Abströmbohrungen 27 und eine axiale Abströmbohrung 28 abzweigen. Die radialen Abströmbohrungen 27 führen zu einem Druckraum 29, der von dem Magnetanker 18, der Führungshülse 15 und dem Ventileinsatz 22 begrenzt ist. Die axiale Abströmbohrung 28 führt an die freie Stirnseite des an dem Magnetanker 18 ausgebildeten Ventilsschließglieds 19, welches zur Abdichtung der Abströmdüsen 23 einen beispielsweise aus einem Elastomer gebildeten Dichtring 30 trägt.

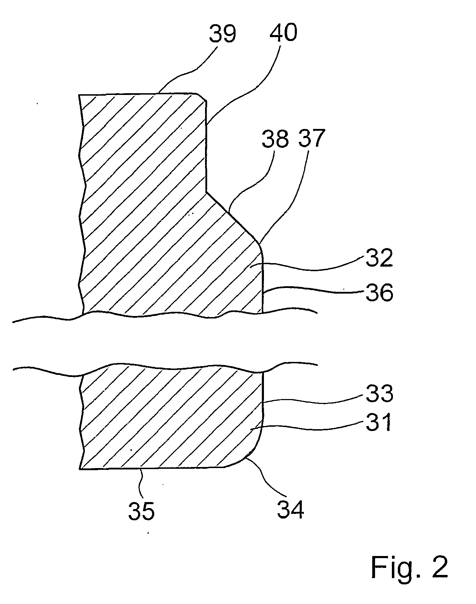

Wie insbesondere auch Figur 2 zu entnehmen ist, hat der Magnetanker 18 zur Führung in der Führungshülse 15 zwei Führungsbünde 31 und 32, wobei der Führungsbund 32 im Bereich des an den Stopfen 16 grenzenden Endbereichs des Magnetankers 18 und der Führungsbund 31 in einem mittleren Bereich des Magnetankers 18 angeordnet ist.

Der Führungsbund 31 bildet eine erste zylindrische Führungsfläche 33, die an ihrer dem Stopfen 16 abgewandten Seite in eine Ausgleichsfläche 34 mit einem gewölbten Querschnitt übergeht, die wiederum in eine dem Stopfen 16 abgewandte, erste Stirnfläche 35 des Magnetankers 18 übergeht. Die Ausgleichsfläche 34, die eine Verrundung einer Begrenzungskante der Führungsfläche 33 darstellt, hat in Querschnittsrichtung einen Krümmungsradius von etwa 0,5 mm. Durch die Ausgleichsfläche 34 liegt ein im mathematischen Sinne stetiger Übergang zwischen der ersten Führungsfläche 33 und der ersten Stirnfläche 35 des Magnetankers vor.

Der Führungsbund 32 bildet ein zweite zylindrische Führungsfläche 36 des Magnetankers 18, welche an ihrer dem Stopfen 16 zugewandten Seite in eine Ausgleichsfläche 37 mit einem gewölbten Querschnitt übergeht, an die sich wieder eine Kegelfläche 38 anschließt. Die Ausgleichsfläche 37, die eine Verrundung einer Begrenzungskante der Führungsfläche 36 darstellt, hat in Querschnittsrichtung einen Krümmungsradius von z. B. 0,7 mm. Die Ausgleichsfläche 37 gewährleistet einen im mathematischen Sinne stetigen Übergang zwischen der zweiten Führungsfläche 36 und der Kegelfläche 38.

Die erste Führungsfläche 33 und die Ausgleichsfläche 34 bilden einen ersten Führungsbereich und die zweite Führungsfläche 36 und die Ausgleichsfläche 37 bilden einen zweiten Führungsbereich des Magnetankers 18.

Zwischen einer zweiten Stirnfläche 39 des Magnetankers 18, die an den Stopfen 16 grenzt, und der Kegelfläche 38 ist eine Beschichtungsauslaufzone 40 ausgebildet, die von einer Zylinderfläche gebildet ist, die einen geringeren Durchmesser als die Führungsflächen 33 und 36 hat. Die Beschichtungsauslaufzone 40 verhindert, dass sich eine Verschleißschutzschicht, die auf der zweiten Stirnfläche 39 des Magnetankers 18 angeordnet ist, herstellungsbedingt in den von der Ausgleichsfläche 37 und der Führungsfläche 36 gebildeten Führungsbereich des Magnetankers 18 erstreckt.

Die Führungsflächen 33 und 36 sowie die Ausgleichsflächen 34 und 37 sind z. B. mit einer Kohlenstoffschicht als Verschleißschutzschicht beschichtet.

## Patentansprüche

1. Ventil zum Steuern eines Fluids, insbesondere zum Steuern eines Gases, umfassend ein Ventilgehäuse (13) und eine elektromagnetische Betätigungseinheit (14) für einen Magnetanker (18), der über mindestens eine zylindrische Führungsfläche (33,36) axial verschiebbar in dem Ventilgehäuse (13) geführt ist und mit einem Ventilsitz (20) zusammenwirkt, so dass ein Fluidstrom zwischen einer Zuströmseite (11) und einer Abströmseite (12) des Ventils steuerbar ist, wobei der Magnetanker (18) mindestens eine Ausgleichsfläche (34, 37) mit einem bezüglich des Magnetankers (18) konvex gewölbten Querschnitt aufweist, die sich in axialer Richtung des Magnetankers (18) an die Führungsfläche (33, 36) anschließt,
**dadurch** gekenntzeichnet,
dass jeweils einer Stirnfläche (35, 39) des Magnetankers (18) eine Ausgleichsfläche (34, 37) zugeordnet ist, wobei wenigstens eine der Ausgleichsflächen (34) unmittelbar stetig in eine Stirnfläche (35) übergeht.

2. Ventil nach Anspruch 1, **dadurch gekennzeichnet, dass** die mindestens eine Ausgleichsfläche (34, 37) in Querschnittsrichtung einen Krümmungsradius von mindestens 0,5 mm hat.

3. Ventil nach einem der Ansprüche 1 oder 2, **dadurch gekennzeichnet, dass** sich an die Ausgleichsfläche (37) eine Kegelfläche (38) anschließt.

4. Ventil nach einem der Ansprüche 1 bis 3, **dadurch gekennzeichnet, dass** zwischen einer Stirnfläche (39) des Magnetankers (18) und der Ausgleichsfläche (37) eine Beschichtungsauslaufzone (40) ausgebildet ist.

5. Ventil nach Anspruch 4, **dadurch gekennzeichnet, dass** die Beschichtungsauslaufzone (40) von einer Zylinderfläche gebildet ist, die einen geringeren Durchmesser als die zylindrische Führungsfläche (33, 36) hat.

## Claims

1. Valve for controlling a fluid, in particular for controlling a gas, comprising a valve housing (13) and an electromagnetic actuating unit (14) for a magnet armature (18) which is guided axially displaceably in the valve housing (13) via at least one cylindrical guide surface (33, 36) and which cooperates with a valve seat (20), so that a fluid stream between an inflow side (11) and an outflow side (12) of the valve can be controlled, the magnet armature (18) having at least one compensating surface (34, 37) which has a cross section convexly curved with respect to the magnet armature (18) and which follows the guide surface (33, 36) in the axial direction of the magnet armature (18), **characterized in that** in each case a compensating surface (34, 37) is assigned to an end face (35, 39) of the magnet armature (18), at least one of the compensating surfaces (34) directly merging continuously into an end face (35).

2. Valve according to Claim 1, **characterized in that** the at least one compensating surface (34, 37) has a radius of curvature of at least 0.5 mm in the cross-sectional direction.

3. Valve according to either one of Claims 1 and 2, **characterized in that** the compensating surface (37) is followed by a conical surface (38).

4. Valve according to one of Claims 1 to 3, **characterized in that** a coating run-out zone (40) is formed between an end face (39) of the magnet armature (18) and the compensating surface (37).

5. Valve according to Claim 4, **characterized in that** the coating run-out zone (40) is formed by a cylindrical surface which has a smaller diameter than the cylindrical guide surface (33, 36).

## Revendications

1. Soupape de commande d'un fluide, notamment pour commander un gaz, comprenant un boîtier de soupape (13) et une unité d'actionnement électromagnétique (14) pour un induit magnétique (18), qui est guidé par le biais d'au moins une surface de guidage cylindrique (33, 36) de manière déplaçable axialement dans le boîtier de soupape (13) et qui coopère avec un siège de soupape (20), de sorte qu'un flux de fluide puisse être commandé entre un côté d'afflux (11) et un côté d'évacuation (12) de la soupape, l'induit magnétique (18) présentant au moins une surface d'équilibrage (34, 37) de section transversale de courbure convexe par rapport à l'induit magnétique (18), qui se raccorde dans la direction axiale de l'induit magnétique (18) à la surface de guidage (33, 36),
**caractérisée en ce que**
l'on associe à chaque fois à une face frontale (35, 29) de l'induit magnétique (18) une surface d'équilibrage (34, 37), au moins l'une des surfaces d'équilibrage (34) se prolongeant directement constamment par une surface frontale (35).

2. Soupape selon la revendication 1, **caractérisée en ce que** l'au moins une surface d'équilibrage (34, 3-7) dans la direction en section transversale a un rayon de courbure d'au moins 0,5 mm.

3. Soupape selon l'une quelconque des revendications 1 ou 2, **caractérisée en ce qu'**une surface conique (38) se raccorde à la surface d'équilibrage (37).

4. Soupape selon l'une quelconque des revendications 1 à 3, **caractérisée en ce qu'**une zone de sortie de revêtement (40) est réalisée entre une surface frontale (39) de l'induit magnétique (18) et la surface d'équilibrage (37).

5. Soupape selon la revendication 4, **caractérisée en ce que** la zone de sortie de revêtement (40) est formée par une surface cylindrique qui a un plus petit diamètre que la surface de guidage cylindrique (33, 36).
